# EUROPÄISCHE PATENTANMELDUNG

(11) **EP 1 215 429 A2**
(43) Veröffentlichungstag der Anmeldung: **19.06.2002**
(21) Anmeldenummer: 01124010.8
(22) Anmeldetag: 09.10.2001
(51) Int. Cl.: F16K 31/06

(54) **Gasmessvorrichtung und Elektromagnetventil dafür**

(30) Priorität: 14.12.2000 DE 10062487
(71) Anmelder: Gruner AG, 78564 Wehingen (DE)
(72) Erfinder: Reger, Arno, 78586 Deilingen (DE); Dillinger, Kevin, 78549 Spaichingen (DE)
(74) Vertreter: KOHLER SCHMID + PARTNER

(57) **Zusammenfassung**

Bei einem Elektromagnetventil (6) mit einem eine Magnetspule (7) umfassenden Magnetantrieb zum Verschieben eines Ankers (10) und mit einem mittels des Ankers (10) gegen die Wirkung einer Schließfeder (19) verschiebbaren Ventilkörper (12) zum Verschließen einer Gasleitung (3) schließt sich an das Gehäuse des Magnetantriebs ein Führungselement (14) an, in dem der Ventilkörper (12) geführt ist, und ist die Schließfeder (19) zwischen Führungselement (14) und Ventilkörper (12) abgestützt. Das Elektromagnetventil (6) wird auf der ins Gehäuse einer Gasmeßvorrichtung mündenden Öffnung der Gasleitung (3) befestigt und ragt mit einer Verbindungshülse (15) in die Gasleitung (3).

## Beschreibung

Die Erfindung betrifft ein Elektromagnetventil mit einem eine Magnetspule umfassenden Magnetantrieb zum Verschieben eines Ankers und mit einem mittels des Ankers gegen die Wirkung einer Rückstellfeder verschiebbaren Ventilkörper zum Verschließen einer Gasleitung sowie eine Gasmeßvorrichtung mit einem solchen Elektromagnetventil.

Ein derartiges Elektromagnetventil ist beispielsweise durch die EP 0 643 813 B1 bekanntgeworden.

Dieses aus der EP 0 643 813 B1 bekannte Elektromagnetventil dient dazu, innerhalb einer Gasmeßvorrichtung die Mündungsöffnung einer Gaszufuhrleitung mit einem Ventilkörper zu verschließen. Die Mündungsöffnung bildet den Ventilsitz, gegen den der Ventilkörper mittels eines Magnetantriebs andrückbar ist. Der Ventilkörper ist mittels eines Kugelgelenks am freien Ende eines Tauchmagnet-Ankers befestigt, der durch den Magnetantrieb zwischen zwei Endstellungen verschiebbar ist. Bei geschlossenem Ventil wirkt das in der Gasleitung anstehende Gas in Öffnungsrichtung des Ventilkörpers. Der Magnetantrieb umfaßt zwei Permanentmagnete, die den Anker in seinen beiden Endstellungen jeweils magnetisch halten. Der Ventilkörper umfaßt neben dem eigentlichen Verschlußelement noch Membranfedern, die mit dem Kugelgelenk zusammenwirken und so beim Öffnen des Ventils das Abheben des Ventilkörpers vom Ventilsitz unterstützen.

Es ist demgegenüber die Aufgabe der Erfindung, bei einem Elektromagnetventil der eingangs genannten Art den Aufbau des Ventilkörpers zu vereinfachen sowie eine entsprechende Gasmeßvorrichtung bereitzustellen.

Diese Aufgabe wird erfindungsgemäß dadurch gelöst, daß sich an das Gehäuse des Magnetantriebs ein Führungselement anschließt, in dem der Ventilkörper geführt ist, und daß die Schließfeder zwischen Führungselement und Ventilkörper abgestützt ist.

Vorzugsweise deckt das Führungselement den Ventilkörper in dessen Bewegungsrichtung vollständig ab. Durch eine solche Abdeckung können am eingebauten Elektromagnetventil Manipulationen zum Öffnen des Ventilkörpers verhindert werden.

Wenn die Schließrichtung des Ventilkörpers der Flußrichtung des Gases durch die Gasleitung entspricht, hält neben der Schließfeder vorteilhafterweise auch der in der Gaszuleitung herrschende Gasdruck den Ventilkörper zusätzlich geschlossen. Auch sind Manipulationen erschwert, da die Öffnungsrichtung des Ventilkörpers entgegengesetzt zur Einführrichtung von Manipulationsgegenständen in die Gaszuleitung gerichtet ist.

Bei besonders bevorzugten Ausführungsformen des erfindungsgemäßen Elektromagnetventils weist der Anker einen Permanentmagneten auf, der den Anker in seinen beiden Endstellungen jeweils in Anlage an einen Anschlag magnetisch hält. Durch einen entsprechenden Stromimpuls der Magnetspule wird dem Magnetfeld des Permanentmagneten ein Magnetfeld überlagert und dadurch der Anker in die jeweils andere Endstellung angezogen.

Vorzugsweise ist der Permanentmagnet zwischen zwei mit dem Magnetantrieb zusammenwirkenden Ankerteilen des Ankers vorgesehen, mit denen der Anker in seinen beiden Endstellungen an den Anschlägen jeweils anliegt.

Bei besonders bevorzugten Ausführungsformen der Erfindung ist eine Verbindungshülse vorgesehen, die das Führungselement mit dem Gehäuse des Magnetantriebs verbindet. Der die Ventilöffnung des Elektromagnetventils umgebende Ventilsitz kann an der Verbindungshülse vorgesehen sein.

In bevorzugten Ausführungsformen der Erfindung weist die Verbindungshülse im Bereich ihres Ventilsitzes eine außen umlaufende Dichtung auf. Dadurch ist die Verbindungshülse, wenn sie in die Mündungsöffnung einer Gasleitung eingesteckt wird, gegenüber der Gasleitung abgedichtet.

Die Verbindungshülse kann am Gehäuse des Magnetantriebs mittels einer Rastverbindung befestigt sein. Diese Maßnahme hat den Vorteil, daß das eigentliche Ventil ein Aufsatzteil auf den Magnetantrieb ist und daher für verschiedene Ventiltypen der gleiche Magnetantrieb verwendet werden kann.

Das Führungselement ist vorzugsweise mit der Verbindungshülse verrastet.

Die Erfindung betrifft auch eine Gasmeßvorrichtung mit einem Elektromagnetventil, wie es oben beschrieben ist. Vorzugsweise ist dabei das Elektromagnetventil auf der ins Gehäuse der Gasmeßvorrichtung mündenden Öffnung der Gasleitung befestigt und ragt die Verbindungshülse in die Gasleitung.

Weitere Vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigt:
- Fig. 1: eine schematische Darstellung einer Gasmeßvorrichtung mit einem erfindungsgemäßen Elektromagnetventil;
- Fig. 2: in geschnittener Vorderansicht das erfindungsgemäße Elektromagnetventil in seiner geschlossenen Ventilstellung; und
- Fig. 3: in geschnittener Seitenansicht das erfindungsgemäße Elektromagnetventil in seiner offenen Ventilstellung.

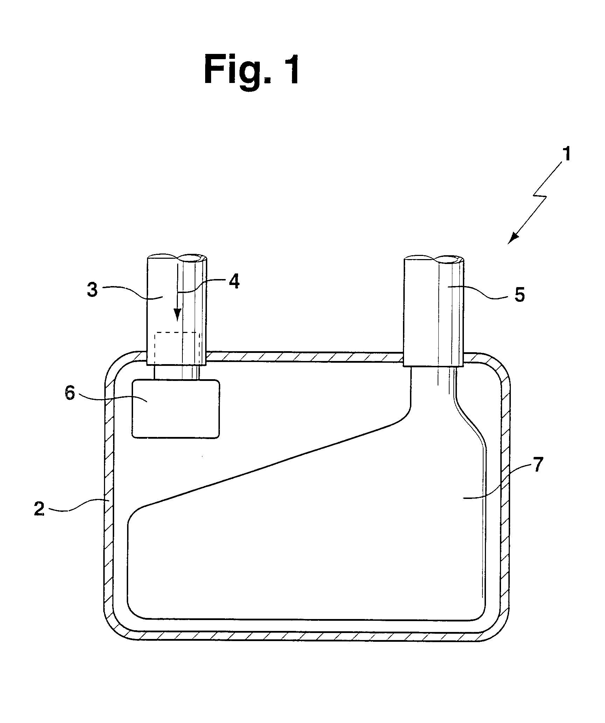

Die in **Fig. 1** insgesamt mit **1** bezeichnete Gasmeßvorrichtung umfaßt ein gasdichtes Gehäuse **2** mit einer Gaszuleitung **3** (Gasflußrichtung **4**) und einer Gasableitung **5** sowie ein im Gehäuse 2 vorgesehenes bistabiles Elektromagnetventil **6**, um die Gaszuleitung 3 zu verschließen. Die durch das Gehäuse 2 hindurchströmende Gasmenge wird mit einer lediglich schematisch angedeuteten Meßeinrichtung **7** gemessen.

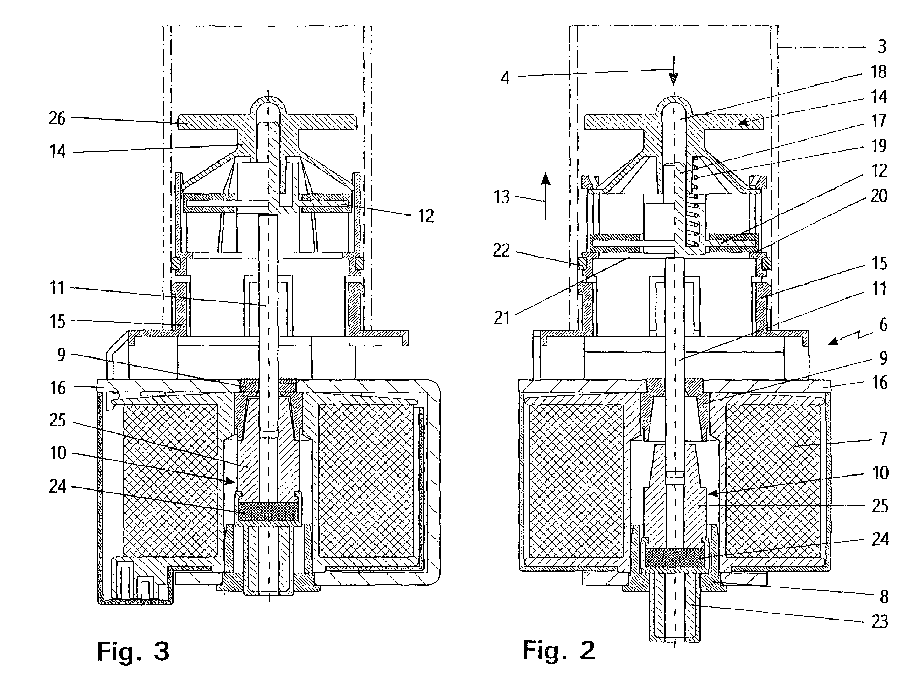

Das in **Fig. 2** und **Fig. 3** gezeigte Elektromagnetventil 6 umfaßt einen Magnetantrieb mit einer Magnetspule **7** und einen in der Magnetspule 7 zwischen zwei Anschlägen **8**, **9** verschiebbar gelagerten Anker **10**, dessen Ankerstößel **11** einen tellerförmigen Ventilkörper **12** in Öffnungsrichtung **13** betätigt. Der Ventilkörper 12 ist zwischen dem Ankerstößel 11 und einem Führungselement **14** angeordnet und im Führungselement 14, das mittels einer Verbindungshülse **15** am C-förmigen Joch **16** des Magnetantriebs befestigt ist, verschiebbar gelagert. Dazu weist der Ventilkörper 12 einen zentralen Führungsabschnitt **17** auf, der in einer zum Ankerstößel 11 hin offenen zentralen Führungsbohrung **18** des Führungselements 14 geführt ist. Am Führungselement 14 ist eine Schließfeder **19** abgestützt, die den Ventilkörper 12 in Richtung auf seinen Ventilsitz **20** vorspannt. Dieser Ventilsitz 20 ist innen an der Verbindungshülse 15 durch einen die Ventilöffnung **21** des Elektromagnetventils 6 definierenden Ringabsatz gebildet. Die Verbindungshülse 15 ist am C-förmigen Joch 16 über eine Rastverbindung befestigt.

Das Elektromagnetventil 6 ist in der ins Gehäuse 2 der Gasmeßvorrichtung 1 mündenden Öffnung der Gaszuleitung 3 befestigt, wobei die in die Gaszuleitung 3 hineinragende Verbindungshülse 15 auf Höhe der Ventilöffnung 21 außen mittels einer Dichtung (O-Ring) **22** gegen die Innenwand der Gaszuleitung 3 abgedichtet ist.

Fig. 2 zeigt das Elektromagnetventil 6 in seiner geschlossenen Ventilstellung, in der der Anker 10 am unteren Anschlag 8 anliegt und der am Ventilsitz 20 anliegende Ventilkörper 12 die Ventilöffnung 21 gasdicht verschließt. Dabei hält neben der Schließfeder 19 der in der Gaszuleitung 3 herrschende Gasdruck den Ventilkörper 12 zusätzlich geschlossen. Der Gasfluß aus der Gaszuleitung 3 in das Gehäuse 2 der Gasmeßvorrichtung 1 ist gesperrt. In dieser geschlossenen Ventilstellung liegt der Ankerstößel 11 nicht am Ventilkörper 12 an.

Fig. 3 zeigt das Elektromagnetventil 6 in seiner offenen Ventilstellung, in der der Anker 10 am oberen Anschlag 9 anliegt und der Ventilkörper 12 durch den Ankerstößel 11 vom Ventilsitz 20 gegen die Wirkung der Schließfeder 19 abgehoben ist. Durch die freigegebene Ventilöffnung 21 strömt das Gas aus der Gaszuleitung 3 in das Gehäuse 2 der Gasmeßvorrichtung 1.

Der Anker 10 ist in Längsrichtung aus einem unteren Ankerteil **23**, einem Permanentmagneten **24** und einem oberen Ankerteil **25** aufgebaut. Durch den Permanentmagneten 24 ist der Anker 10 in seinen beiden Endstellungen bei stromloser Magnetspule 7 in Anlage am jeweiligen Anschlag 8 bzw. 9 magnetisch gehalten. In der geschlossenen Ventilstellung (Fig. 2) wirkt der Permanentmagnet 24 mit dem unteren Anschlag 8 und in der offenen Ventilstellung (Fig. 1) mit dem oberen Anschlag 9 magnetisch zusammen. Durch einen entsprechenden Stromimpuls der Magnetspule 7 wird dem Magnetfeld des Permanentmagneten 24 ein Magnetfeld überlagert und dadurch der Anker 10 in die jeweils andere Endstellung bewegt, wobei die Bewegungsrichtung von der Anschlußpolarität abhängt.

Das Führungselement 14 deckt den Ventilkörper 12, gesehen in dessen Öffnungsrichtung, mit einem Schutzteller **26** vollständig ab, so daß Manipulationen zum Öffnen und Schließen des Ventilkörpers 12 durch einen in die Gaszuleitung 3 (in den Fign. 2 und 3 von oben) eingeführten Gegenstand verhindert sind. Solche Manipulationen sind auch dadurch erschwert, daß die Öffnungsrichtung 13 des Ventilkörpers 12 entgegengesetzt zur Einführrichtung von Manipulationsgegenständen in die Gaszuleitung 3 gerichtet ist.

## Patentansprüche

1. Elektromagnetventil (6) mit einem eine Magnetspule (7) umfassenden Magnetantrieb zum Verschieben eines Ankers (10) und mit einem mittels des Ankers (10) gegen die Wirkung einer Schließfeder (19) verschiebbaren Ventilkörper (12) zum Verschließen einer Gasleitung (3), **dadurch gekennzeichnet,**
**daß** sich an das Gehäuse des Magnetantriebs ein Führungselement (14) anschließt, in dem der Ventilkörper (12) geführt ist, und daß die Schließfeder (19) zwischen Führungselement (14) und Ventilkörper (12) abgestützt ist.

2. Elektromagnetventil nach Anspruch 1, **dadurch gekennzeichnet, daß** das Führungselement (14) den Ventilkörper (12) in dessen Bewegungsrichtung vollständig abdeckt.

3. Elektromagnetventil nach Anspruch 1 oder 2, **dadurch gekennzeichnet, daß** die Schließrichtung des Ventilkörpers (12) der Flußrichtung (4) des Gases durch die Gasleitung (3) entspricht.

4. Elektromagnetventil nach einem der vorhergehenden Ansprüche, **dadurch gekennzeichnet, daß** der Anker (10) einen Permanentmagneten (24) aufweist, der den Anker (10) in seinen beiden Endstellungen jeweils in Anlage an einen Anschlag (8, 9) magnetisch hält.

5. Elektromagnetventil nach Anspruch 4, **dadurch gekennzeichnet, daß** der Permanentmagnet (24) zwischen zwei mit dem Magnetfeld der Magnetspule (7) zusammenwirkenden Ankerteilen (23, 25) des Ankers (10) vorgesehen ist.

6. Elektromagnetventil nach einem der vorhergehenden Ansprüche, **gekennzeichnet durch** eine Verbindungshülse (15), die das Führungselement (14) mit dem Gehäuse des Magnetantriebs verbindet.

7. Elektromagnetventil nach einem Anspruch 6, **dadurch gekennzeichnet, daß** der die Ventilöffnung (21) des Elektromagnetventils (6) umgebende Ventilsitz (20) an der Verbindungshülse (15) vorgesehen ist.

8. Elektromagnetventil nach Anspruch 7, **dadurch gekennzeichnet, daß** die Verbindungshülse (15) im Bereich ihres Ventilsitzes (20) eine außen umlaufende Dichtung (22) aufweist.

9. Elektromagnetventil nach einem der Ansprüche 6 bis 8, **dadurch gekennzeichnet, daß** die Verbindungshülse (15) am Gehäuse des Magnetantriebs mittels einer Rastverbindung befestigt ist.

10. Elektromagnetventil nach einem der Ansprüche 6 bis 9, **dadurch gekennzeichnet, daß** das Führungselement (14) mit der Verbindungshülse (15) verrastet ist.

11. Gasmeßvorrichtung (1) mit einem Elektromagnetventil (6) nach einem der vorhergehenden Ansprüche zum Verschließen einer Gasleitung (3) der Gasmeßvorrichtung (1).

12. Gasmeßvorrichtung nach Anspruch 11, **dadurch gekennzeichnet, daß** das Elektromagnetventil (6) auf der ins Gehäuse (2) der Gasmeßvorrichtung (1) mündenden Öffnung der Gasleitung (3) befestigt ist und die Verbindungshülse (15) in die Gasleitung (3) ragt.
